# EUROPEAN PATENT SPECIFICATION

(11) **EP 0 377 969 B1**
(45) Date of publication and mention of the grant of the patent: **22.02.1995**
(21) Application number: 89312895.9
(22) Date of filing: 11.12.1989
(51) Int. Cl.: G06F 12/08

(54) **I/O cached computer systems**
Rechneranordnungen mit Ein-/Ausgabecachespeicher
Systèmes d'ordinateurs à antémémoire d'entrée/sortie

(30) Priority: 13.01.1989 US 297775
(43) Date of publication of application: 18.07.1990
(73) Proprietor: International Business Machines Corporation, Armonk, N.Y. 10504 (US)
(72) Inventor: Nicholson, James Otto, Austin Texas 78731 (US); O'Quin, John Claude, III, Austin Texas 78731 (US); O'Quin, John Thomas, II, Austin Texas 78727 (US); Strietelmeier, Frederick Ernest, Austin Texas 78758 (US)
(74) Representative: Bailey, Geoffrey Alan

(56) References cited:
- EP-A- 0 192 202
- ELECTRONIC DESIGN, vol. 30, no. 5, March 1982, pages 93-98, Waseca, MN,Denville, NJ, US; J. VanAKEN: "Match cache architecture to the computer system"
- COMPUTING SURVEYS, vol. 14, no. 3, September 1982, pages 473-530, New York, US;A.J. SMITH: "Cache memories"
- COMPUTER DESIGN, vol. 24, no. 6, June 1982, pages 157-159, Littleton,Massachusetts, US; M.M. TEHRANIAN: "Twin cache tags enable concurrent micro/DMAprocessing"

## Description

The present invention is relates to I/O cached computer systems.

Computer systems generally have several different storage layers defining a memory hierarchy. These layers typically include registers in a central processing unit, main system memory, and mass storage, such as disks. The performance of these different levels is quite different. The processor registers are much faster than system memory, which in turn is significantly faster than access to mass storage.

In order to improve system performance, a cache consisting of a small, fast memory, is often used between the central processor and system memory. The cache takes advantage of the locality of reference phenomenon within computer programs to store data which is likely to be reused into the fast memory.

The use of a cache memory between the central processor and system memory allows the system memory to be designed for high speed access. Transfer of data between the cache memory and the system memory is performed as block transfers which have a length dependent upon the cache memory design. The system memory design can be optimised for block data transfers to take advantage of this. For example, interleaved memory accessing can be used for the main system memory.

In many systems, input/output devices also have access to the main system memory. In systems of this type, the main memory cannot be designed to only support block transfers, because the input/output devices are generally not capable of block data transfers. In fact, many input/output devices, such as keyboards and input/output ports, are single character oriented devices.

Since many cache designs for use between the central processor and system memory do not allow use by the input/output devices and overall system performance is adversely affected. Input/output devices must access system memory at their lower performance levels. Although the central processor can operate on data in its cache at any time, a cache miss causes the central processor to wait whenever an input/output device is performing a read to, or write from, system memory.

The present invention provides a computer system including a CPU, a system memory and at least one I/O device, the system memory having a CPU cache and at least one I/O cache, wherein the system memory is divided into a CPU non-shared memory portion, an I/O non-shared memory portion, and a shared memory portion, and wherein access to the shared memory portion, either from the CPU or from the I/O device, is made exclusively through the I/O cache.

The present invention will be described further by way of example with reference to an embodiment thereof as illustrated in the accompanying drawings, in which
Figure 1 is a block diagram of a computer system; and
Figure 2 is a flow chart illustrating operation of the computer system of Figure 1.

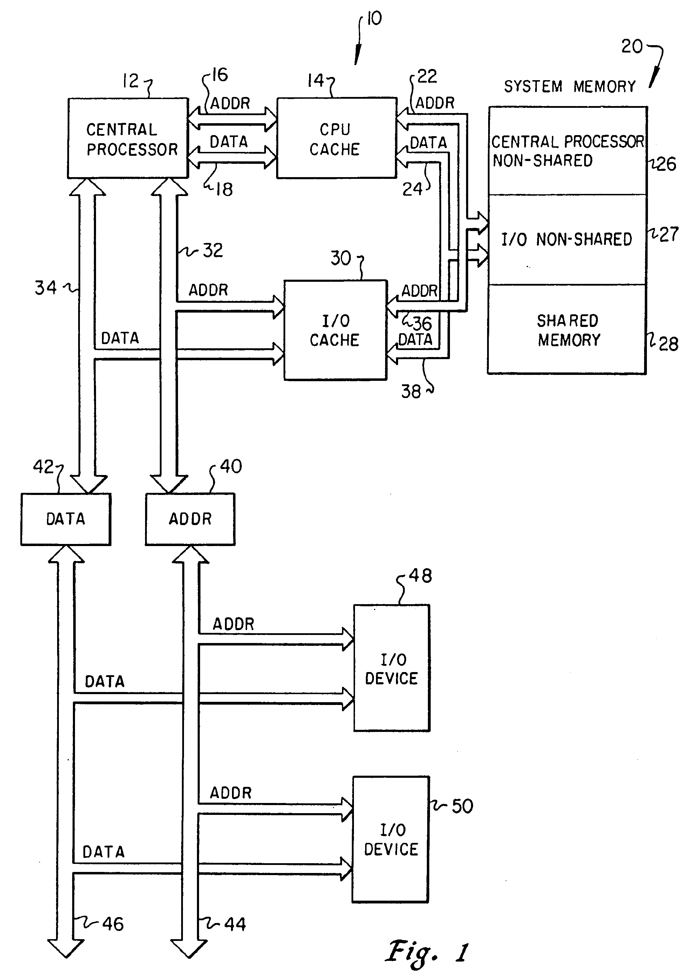

The computer 10 system of Figure 1 contains a central processor 12. A central processor cache 14 is attached to the central processor 12 through address signal lines 16 and data signal lines 18. The central processor cache 14 is connected to a system memory 20 through address signal lines 22 and data signal lines 24.

The system memory 20 is divided into a central processor non-shared memory portion 26, an I/O non-shared memory portion 27, and a shared memory portion 28. Although the central processor non-shared memory 26, the I/O non-shared memory 27 and shared memory 28 may be physically separate memories, in the disclosed arrangement they are merely selected portions of the address space for the system memory 20. A particular page in system memory 20 can move from one portion to the other. For example, a page could be in I/O non-shared memory 27 while an I/O device is loading an executable file into that page, and then re-assigned to central processor non-shared memory 26 for execution. It is not necessary that shared memory 28 be contiguous. In a virtual memory system, selected virtual pages will generally be reserved for shared memory 28. Since a virtual page can be located anywhere within physical memory, the shared memory 28 pages will generally be scattered throughout the physical memory. The CPU cache 14 is not allowed to generate valid address signals into the shared memory 28.

An input/output cache 30 is connected to the central processor 12 through address signal lines 32 and data signal lines 34. The I/O cache 30 is also connected to the system memory 20 through address lines 36 and data lines 38.

The I/O cache 30 is not allowed to generate valid address signals which address the central processor non-shared memory 26. The shared memory 28 addresses accessible through the I/O cache 30 are used as memory locations which are accessible by either the central processor 12 or input/output devices. The I/O non-shared memory 27 locations are accessible only by input/output devices. Because of the addressing constraints on the CPU cache 14 and the I/O cache 30, input/output devices can access only addressable locations within the shared memory or the I/O non-shared memory. The central processor 12 can access only the central processor non-shared memory 26 and the shared memory 28.

Address buffer 40 connects address signal lines 32 to an I/O address bus 44. Data buffer 42 connects data signal lines 34 to an I/O data bus 46. The address and data busses 44, 46, plus control signals (not shown), define an input/output bus, and all input/output devices are attached to this bus. Figure 1 shows, by way of example, I/O device 48 and I/O device 50 attached to the busses, 44, 46.

The input/output devices 48, 50, represent any type of input/output device which may be attached to the input/output bus 44, 46. For example, such devices can include keyboards, video display controllers, serial and parallel I/O ports, mass storage controllers, and real time machine controllers. In general, any computer subsystem other than the central processor 12, system memory 20, and the two caches 14, 30 can come within the term input/output device.

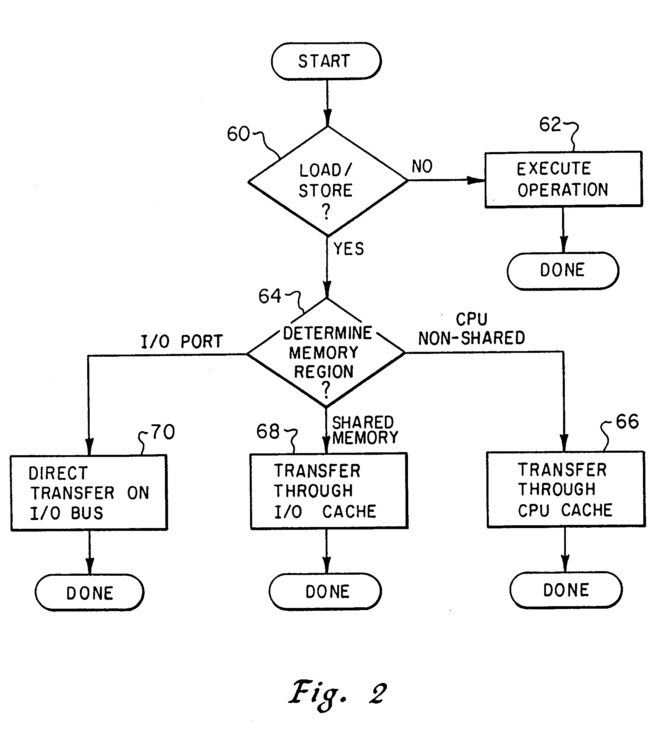

Figure 2 is a flow chart illustrating operation of the above arrangement. For each instruction executed by the central processor 12 that involves memory 20, its instruction OPCODE determines whether the instruction is a load or store operation to memory - step 60-. If the instruction is not a load or store, it is executed in its usual manner -step 62-.

If the operation is a load or store, the next step is to determine which memory region is being accessed -step 64-. If the memory address indicates an access to the central processor non-shared memory 26, the memory transfer is made through the central processor cache -step 66-. If the memory address is a location in shared memory 28, the transfer is made through the input/output cache -step 68-. Since the central processor 12 makes all memory accesses into shared memory 28 through the input/output cache 30, there is no problem concerning cache coherency between the central processor cache 14 and the input/output cache 30. The caches 14, 30 are not accessing any common memory locations, so it is not possible for the caches 14, 30 to hold different values for the same memory location.

If the test of step 64 determines that the operation is addressed to an input/output port, the central processor 12 performs a direct transfer on the input/output bus -step 70-. Input/output ports reside in an address space separate and distinct from the system memory address space. A separate input/output address space is implemented in several widely used architectures, including the 80x86 family of microprocessors manufactured by Intel.

The flow chart of Figure 2 describes memory access by the central processor 12. When input/output device makes a memory access, it is necessary only to perform the test of step 64 to determine if the access is to a location in system memory 20 or to an input/output port. If the transfer is to or from an input/output port, a direct transfer is made on the input/output bus, and shared memory and I/O non-shared memory 28 transfers are made through the input/output cache.

The system described above has several important features. Since the system memory 20 is accessed only through caches 14, 30, it can be optimised for high speed block transfers. A properly designed input/output cache 30 will give the same type of benefits for input/output device 48, 50 data transfer as the CPU cache 14 does for central processor 12 transfer. One suitable form of input/output cache 30 is described in detail in co-pending European patent applications 89312897.5 and 89312896.7 which share a common specific description.

An additional benefit of the use of an input/output cache 30 is that input/output devices and the central processor 12 can operate in parallel. The only conflicts which would arise to contemporaneous operation occur when the central processor 12 accesses an I/O port directly, when the central processor 12 accesses shared memory 28 through the input/output cache 30, or when both the central processor cache 14 and the input/output cache attempt to access the system memory 20 at the same time.

## Claims

1. A computer system including a CPU, a system memory and at least one I/O device, the system memory having a CPU cache and at least one I/O cache, wherein the system memory is divided into a CPU non-shared memory portion, an I/O non-shared memory portion, and a shared memory portion, and wherein access to the shared memory portion, either from the CPU or from the I/O device, is made exclusively through the I/O cache.

2. A computer system as claimed Claim 1, wherein data transfers between the central processor and the input/output device are made directly without accessing the input/output cache.

## Patentansprüche

1. Ein Computersystem, das eine Zentraleinheit (CPU), einen Systemspeicher und mindestens ein Ein-/Ausgabegerät umfaßt, wobei der Systemspeicher einen CPU-Cache und mindestens einen Ein/Ausgabe-Cache besitzt, und in dem der Systemspeicher in einen nicht gemeinsam genutzten CPU-Speicherbereich, einen nicht gemeinsam genutzten Ein-/Ausgabe-Speicherbereich und einen gemeinsam genutzten Speicherbereich aufgeteilt ist, und in dem der Zugriff auf den gemeinsam genutzten Speicherbereich, sei es von der Zentraleinheit (CPU) oder vom Ein-/Ausgabegerät, ausschließlich über den Ein-/Ausgabe-Cache erfolgt.

2. Ein Computersystem gemäß Anspruch 1, in dem die Datenübertragungen zwischen dem Zentralprozessor und dem Ein-/Ausgabegerät direkt ohne Zugriff auf den Ein-/Ausgabe-Cache erfolgen.

## Revendications

1. Système informatique comprenant une unité centrale de traitement (UC) une mémoire de système et au moins une unité d'Entrée/sortie (E/S), la mémoire de système comportant un cache UC et au moins un cache E/S, dans lequel la mémoire de système est divisée en une partie de mémoire UC non-partagée, une partie de mémoire E/S non-partagée, et une partie de mémoire partagée, et dans lequel l'accès à la partie de mémoire partagée, à partir de l'UC ou de l'unité E/S, est réalisé uniquement à travers le cache E/S.

2. Système informatique selon la revendication 1 dans lequel les transferts de données entre l'unité centrale et l'unité d'entrée/sortie sont réalisés directement sans accès au cache d'entrée/sortie.
